# FASCICULE DE BREVET EUROPEEN

(11) **EP 2 001 169 B1**
(45) Date de publication et mention de la délivrance du brevet: **13.03.2013**
(21) Numéro de dépôt: 08290494.7
(22) Date de dépôt: 29.05.2008
(51) Int. Cl.: H04L 12/40, H04B 3/54, H04L 29/14, B60R 16/03

(54) **Dispositif de raccordement de composants sur une ligne de BUS, ligne de BUS et procédés de régénération d'une ligne de BUS mettant en oeuvre un tel dispositif de raccordement**
Vorrichtung zum Anschließen von Komponenten an eine BUS-Linie, BUS-Linie und Wiederherstellungsverfahren einer BUS-Linie durch Anwendung einer solchen Anschlussvorrichtung
Device for connecting components to a BUS line, BUS line and methods for regenerating a BUS line implementing such a connection device

(30) Priorité: 04.06.2007 FR 0703934
(43) Date de publication de la demande: 10.12.2008
(73) Titulaire: NEXTER Systems, 42328 Roanne Cedex (FR)
(72) Inventeur: Miotti, Luc, 78960 Voisins le Bretonneux (FR)
(74) Mandataire: Célanie, Christian

(56) Documents cités:
- EP-A- 0 281 534
- EP-A- 0 419 712
- EP-A- 0 895 899
- EP-A- 1 069 733
- WO-A-95/24087
- WO-A-98/30961
- DE-A1- 3 012 438

## Description

Le domaine technique de l'invention est celui des dispositifs permettant de raccorder un composant sur une ligne de BUS bifilaire.

Il est connu de commander et/ou alimenter en énergie différents composants à partir d'une unité centrale de commande et au travers d'une liaison filaire appelée BUS.

Une telle solution permet de simplifier le câblage et elle autorise la mise en place ultérieure de nouveaux composants sur la ligne. Le BUS peut être un BUS parallèle ou un BUS série et il comporte généralement au moins deux fils.

Les brevets EP-834813 et FR-2801698 décrivent de tels systèmes de commande par BUS appliqués à des dispositifs de sécurité pour véhicule automobile.

Le brevet EP-1069733 décrit une ligne de BUS comportant des noeuds au niveau desquels se trouvent deux résistances terminales. Il est donc possible au niveau de chaque noeud de positionner une résistance terminale à gauche, à droite ou des deux côtés. Par ailleurs, le composant raccordé au niveau du noeud peut être connecté à gauche ou à droite à l'aide des contacteurs. Ce document ne décrit pas de commutateur permettant de déconnecter complètement le composant d'une ligne qui resterait passante. Il n'est d'autre part pas question de gérer la reconfiguration en mettant en oeuvre des durées choisies de façon aléatoire.

Le document WO 9524087 montre lui aussi un réseau dans lequel chaque noeud comporte deux résistances terminales de part et d'autre des points de raccordement du composant. Chaque résistance peut être insérée à l'aide d'interrupteurs spécifiques. Ce document ne décrit cependant pas de commutateur permettant de connecter ou déconnecter le composant 4 sur ses points de raccordement.

Le document EP-0281534 décrit un procédé de reconfiguration d'une ligne de BUS. Il montre aussi une ligne dans laquelle chaque noeud comporte deux résistances, mais il n'y a pas là non plus de commutateur entre le composant et les points de raccordement.

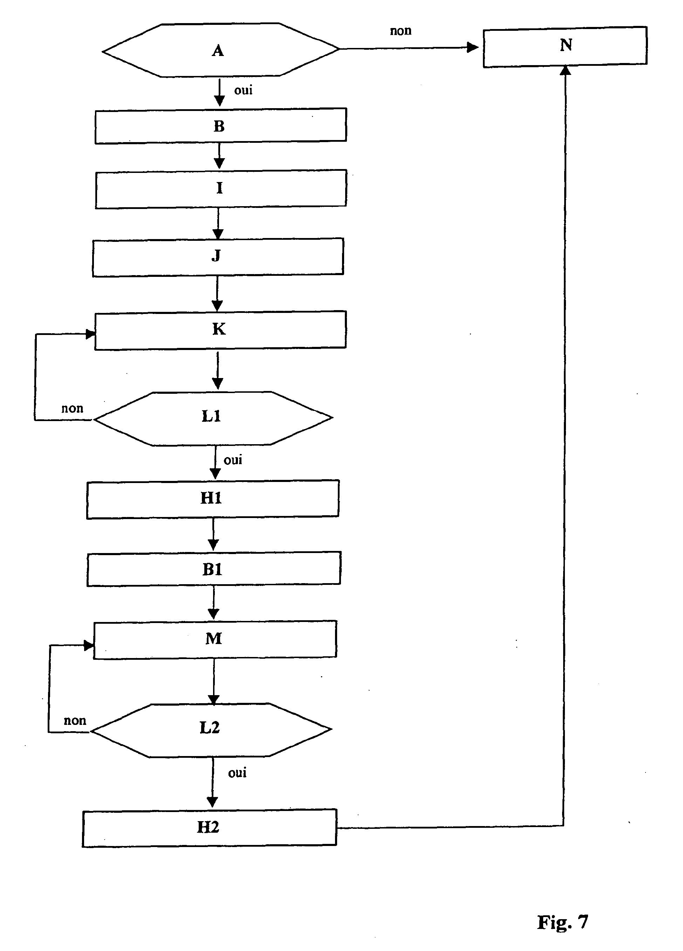

Le document WO9830961 montre un bus annulaire dans lequel chaque noeud comporte deux résistances de terminaison qui sont connectables par des contacteurs spécifiques RE1, RE2. La figure 7 montre aussi une variante dans laquelle deux autres contacteurs RE4, RE5 permettent de connecter ou déconnecter le composant ECU sur la ligne de Bus. Cette configuration ne permet pas de déconnecter le composant en laissant la ligne continue au niveau du noeud.

Le document EP-0419712 décrit un moyen de couplage pour lignes de bus de grande longueur (>1km). Chaque noeud comporte des moyens qui permettent le rafraîchissement des signaux transmis. Par ailleurs on remarque que chaque noeud comporte là encore deux jeux de résistances terminales raccordables à la ligne par des contacts spécifiques. Il n'est pas question ici de commutateurs qui peuvent déconnecter un composant d'une ligne de bus sans couper la ligne.

Le document DE-3012438 montre une ligne de bus dans laquelle chaque noeud comporte deux résistances de terminaison disposées de part et d'autre des points de raccordement. Il n'est pas question ici de commutateur pouvant déconnecter un composant d'une ligne de bus sans couper la ligne.

Lorsque l'on met en oeuvre un BUS parallèle il est nécessaire de prévoir au niveau de chaque extrémité du BUS une résistance de fermeture du BUS (ou résistance terminale) qui permet de relier les deux lignes du BUS.

Par ailleurs, un composant doit pouvoir être connecté ou déconnecté au BUS en fonction des besoins ou bien en cas de défaillance du composant. Il est aussi nécessaire de pouvoir reconfigurer le BUS en cas de coupure accidentelle de la ligne. Cela afin que les composants situés de part et d'autre de la coupure puissent être commandés et/ou recevoir de l'énergie.

C'est pourquoi, il a été développé des dispositifs qui permettent d'assurer la gestion du raccordement du composant et de la reconfiguration de la ligne de BUS.

Le brevet EP-895899 décrit un tel dispositif de raccordement ou noeud de raccordement.

Suivant ce brevet chaque noeud comprend deux contacteurs permettant d'interrompre les lignes de BUS en amont ou en aval des branches de raccordement du composant.

Par ailleurs, un autre contacteur permet d'introduire une résistance terminale entre les lignes de BUS.

Ainsi, avec ce dispositif, le composant peut se trouver en milieu de ligne lorsque la résistance terminale est non connectée et que les deux contacteurs gauche et droite sont fermés.

Le composant peut également se trouver en extrémité de ligne à gauche ou à droite. Il suffit pour cela qu'un seul des contacteurs soit fermé et que la résistance terminale soit raccordée.

Bien entendu les différents contacteurs sont actionnés par un moyen de commande électronique qui peut être incorporé au noeud lui-même ou bien au composant. Ce moyen de commande met en oeuvre un algorithme qui permet de détecter les coupures ou incidents sur le BUS et qui commande alors les ouvertures et fermetures de contacts permettant de reconfigurer le BUS pour tenir compte de la coupure ou de l'incident.

Ce dispositif connu présente cependant des inconvénients.

Ainsi, ce dispositif ne permet de donner au noeud qu'un nombre restreint de configurations : circuit ouvert à gauche ou à droite et raccordé d'un côté sur la résistance de terminaison.

Il ne permet pas d'isoler complètement un composant de la ligne. Il ne permet pas non plus de mettre en place sur une ligne un composant éventuellement entre deux noeuds.

En effet, la plupart du temps le dispositif de raccordement constituant le noeud est incorporé au composant ou à son moyen de connexion. Il peut pourtant être nécessaire dans certains cas d'introduire des nouveaux composants sur la ligne de BUS, composants n'incorporant pas les moyens ou contacteurs incorporés au noeud ou n'ayant pas de connecteur comportant ces moyens.

Il est alors nécessaire de pouvoir néanmoins reconfigurer la ligne de BUS en cas de coupure accidentelle.

L'invention a pour but de proposer un dispositif (ou noeud) de raccordement permettant de pallier de tels inconvénients. Le dispositif de raccordement selon l'invention permet ainsi de donner de nombreuses configurations au noeud de raccordement. Il permet notamment de connecter le composant sur une ligne au choix : à gauche, à droite, des deux côtés et également de le déconnecter.

L'invention a également pour objet une ligne de BUS incorporant un tel dispositif de raccordement ainsi qu'un procédé de régénération d'une telle ligne de BUS.

Le procédé selon l'invention permet de prendre en compte d'une façon automatique différentes coupures intervenant à plusieurs endroits du BUS.

Ainsi, l'invention a pour objet un dispositif de raccordement d'un composant sur une ligne de BUS bifilaire, dispositif comportant au moins une résistance terminale et des moyens permettant d'assurer la connexion et/ou la déconnexion du composant sur la ligne ainsi que la mise en place de la résistance terminale entre les deux lignes de BUS, dispositif comprenant également des moyens de commande des différents moyens de connexion, dispositif caractérisé en ce qu'il comporte deux résistances terminales différentes disposées de part et d'autre des points de raccordement du composant, chaque résistance terminale pouvant être insérée entre les lignes de BUS par un interrupteur spécifique faisant partie du dispositif et piloté par les moyens de commande, les moyens permettant d'assurer la connexion et/ou la déconnexion du composant sur la ligne comprenant par ailleurs deux commutateurs faisant eux aussi partie du dispositif et pilotés également par les moyens de commande et interposés chacun entre une ligne du BUS et une branche de raccordement du composant, les commutateurs étant des commutateurs comportant au moins quatre positions différentes: connecté sur la ligne de BUS à gauche, connecté sur la ligne de BUS à droite, connecté sur une ligne de BUS continue, déconnecté d'une ligne de BUS continue.

Selon une caractéristique de l'invention, chaque commutateur est constitué par un montage en triangle ou en étoile de trois interrupteurs actionnables individuellement.

Selon une autre caractéristique de l'invention, les moyens de commande sont associés à des moyens mémoires permettant de mémoriser au niveau du dispositif les présences ou non-présence des autres dispositifs de raccordement disposés en amont et en aval du dispositif considéré.

L'invention concerne également une ligne de BUS bifilaire permettant de relier différents composants d'un circuit, caractérisée en ce qu'elle comporte au moins deux dispositifs de raccordement, chaque dispositif de raccordement comportant des moyens permettant de détecter une coupure de la ligne et comportant par ailleurs dans ses moyens mémoires un algorithme de régénération du BUS qui est mis en oeuvre lors de la détection d'une coupure.

Selon une caractéristique de la ligne de BUS bifilaire, les moyens permettant de détecter une coupure de cette ligne comprennent un algorithme spécifique assurant l'émission périodique sur la ligne par chaque dispositif d'un signal de présence, algorithme détectant une coupure par l'absence d'au moins un signal devant être émis par un autre dispositif.

Selon encore une caractéristique de la ligne de BUS bifilaire, chaque dispositif raccordé au BUS comporte un numéro d'ordre qui lui est affecté lors de la définition du BUS et qui lui permet de repérer sa position par rapport aux dispositifs voisins.

L'invention concerne encore un procédé de régénération d'une ligne de BUS bifilaire et mettant en oeuvre des dispositifs de raccordement, caractérisé en ce que :
- chaque dispositif de raccordement se connecte vers la gauche ou vers la droite puis émet un signal de présence et reste à l'écoute pendant une durée maximale d'écoute donnée choisie de façon aléatoire et mémorise un message de présence éventuel reçu d'un autre dispositif,
- chaque dispositif se retourne à l'issue de la durée maximale d'écoute pour se connecter de l'autre côté, émettre un signal de présence, rester à l'écoute pendant une durée maximale d'écoute donnée choisie elle aussi de façon aléatoire et mémoriser un message de présence éventuel reçu d'un autre dispositif,
- tous les dispositifs adoptent au bout d'une durée de régénération maximale donnée (Tmax) la configuration qui correspond à leur situation dans le BUS en fonction de la présence ou non de dispositifs voisins détectés au cours des phases d'écoute successives.

Selon une caractéristique du procédé :
- tous les dispositifs s'orientent au préalable suivant la même direction,
- le dispositif ayant le numéro d'ordre minimal N₀ se retourne seul,
- tous les dispositifs émettent un signal de présence avec une période donnée (T_{gi}) et chaque dispositif mémorise la présence éventuelle d'un dispositif voisin,
- si un dispositif de rang Ni reçoit un signal de présence d'un dispositif de rang Nᵢ₋₁ il bascule en mode passant,
- si un dispositif de rang Nᵢ ne peut recevoir de signal d'un dispositif de rang Nᵢ₊₁, il se retourne,
- on considère comme connectés tous les dispositifs ayant détecté au moins un dispositif voisin et comme non connectés ceux n'ayant détecté aucun dispositif voisin,
- tous les dispositifs connectés adoptent au bout d'une première durée de régénération maximale donnée (Tmax1) la configuration qui correspond à leur situation dans le BUS en fonction de la présence ou non de dispositifs voisins détectés au cours des phases d'écoute successives.

Selon une autre caractéristique du procédé :
- on retourne au bout de la première durée de régénération maximale (Tmax1) tous les dispositifs non connectés,
- tous les dispositifs non connectés émettent un signal de présence avec une période donnée et chaque dispositif mémorise la présence éventuelle d'un dispositif voisin,
- si un dispositif de rang Nᵢ reçoit un signal de présence d'un dispositif de rang Nᵢ₊₁ il bascule en mode passant,
- tous les dispositifs non connectés adoptent au bout d'une deuxième durée de régénération maximale donnée (Tmax2) la configuration qui correspond à leur situation dans le BUS en fonction de la présence ou non de dispositifs voisins détectés au cours des phases d'écoute successives.

L'invention sera mieux comprise à la lecture de la description qui va suivre de différents modes de réalisation, description faite en référence aux dessins annexés et dans lesquels :
- la figure 1 représente schématiquement un BUS annulaire sur lequel sont raccordés différents composants,
- la figure 2 est un schéma plus détaillé d'un dispositif de raccordement selon l'invention,
- les figures 3a et 3b montrent deux modes de réalisation d'un commutateur permettant de raccorder un composant au bus,
- les figures 4a à 4n montrent différentes configurations possibles pour le dispositif selon invention ainsi que les représentations symboliques qui ont été choisies pour représenter ces configurations dans la description du procédé de régénération,

Le BUS bifilaire 1 est ici un BUS de transmission de données donc un BUS parcouru par un courant d'intensité réduite (de l'ordre du milli ampère) et qui véhicule les signaux de commande et les signaux fournis par les différents composants.

La puissance électrique est conduite aux composants par une ligne de puissance distincte (et non représentée) qui pourra aussi adopter la forme d'un BUS.

On notera que les moyens de l'invention peuvent également être transposés à la définition de moyens de raccordement d'un BUS de puissance ainsi qu'à la régénération d'un tel BUS de puissance.

L'énergie électrique permettant le fonctionnement du BUS 1 est fournie par une ou plusieurs sources solidaires d'un ou de plusieurs des composants 2.i.

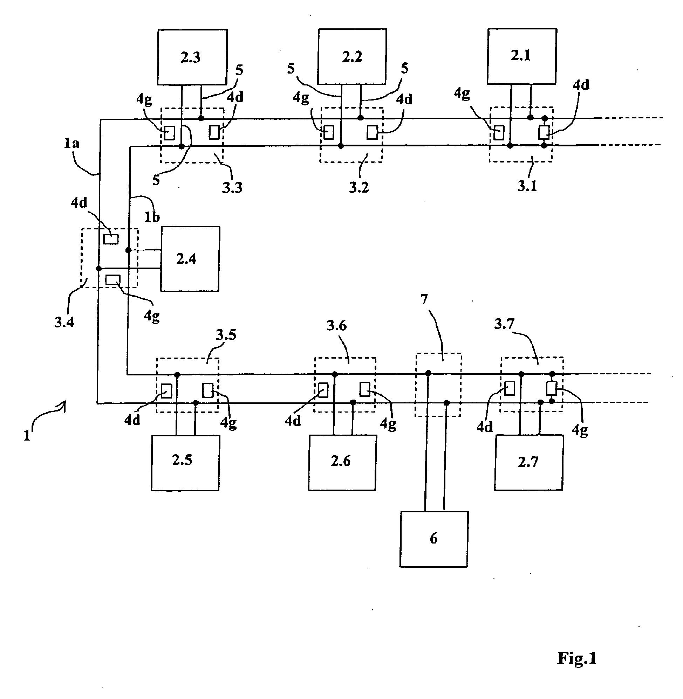

Chaque dispositif de raccordement 3 est représenté ici très schématiquement mais on a mis en évidence sur la figure 1 que chaque dispositif 3 comportait deux résistances terminales différentes 4d, 4g (d comme : droite et g comme gauche) disposées de part et d'autre des branches de raccordement 5 du composant considéré 2.i.

Les résistances terminales ne sont raccordées aux lignes du BUS qu'au niveau des composants d'extrémité du BUS. On a sur la figure 1 fermé le bus, d'une part par la résistance 4d au niveau du dispositif de raccordement 3.1 du composant 2.1, et d'autre part par la résistance 4g au niveau du dispositif de raccordement 3.7 du composant 2.7.

Les autres résistances 4 incorporées dans les autres dispositifs de raccordement 3.i sont déconnectées du BUS.

On a aussi représenté sur la figure 1 un composant 6 qui est raccordé directement sur le BUS par un connecteur 7 qui n'est pas pourvu des moyens de raccordement selon l'invention. On pourra voir par la suite que grâce au dispositif selon l'invention, le BUS peut être régénéré malgré la présence d'un ou de plusieurs de ces composants standard dépourvus de moyen de régénération.

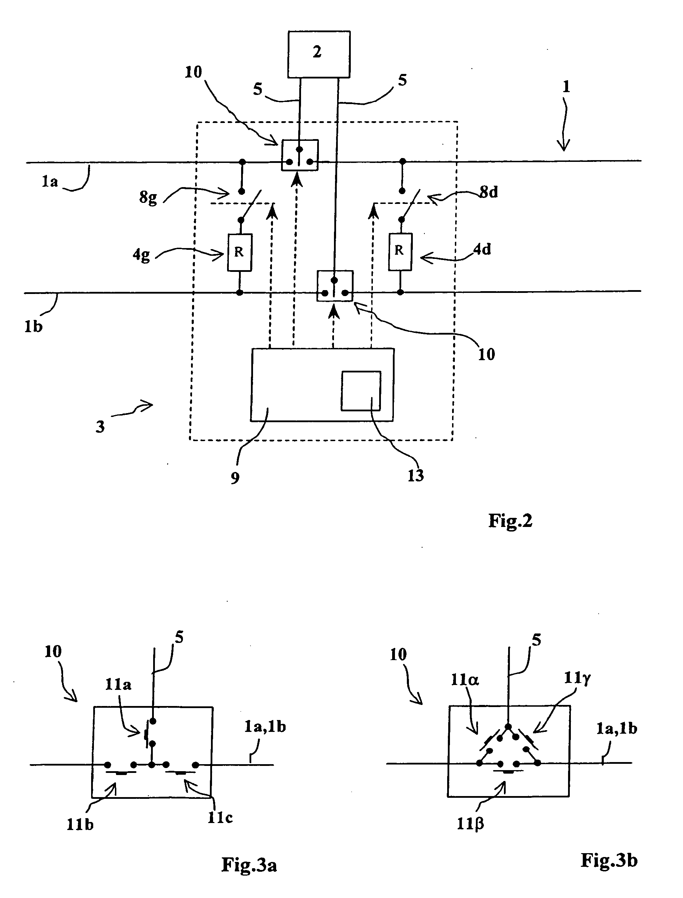

La figure 2 montre de façon plus détaillée la structure d'un dispositif 3 (ou noeud) de raccordement selon l'invention. On voit que chaque résistance terminale 4d, 4g peut être mise en place entre les deux lignes de BUS par l'intermédiaire d'un interrupteur spécifique 8d, 8g qui est piloté par un moyen de commande 9 qui est un composant électronique faisant ici partie physiquement du dispositif 3 (mais qui pourrait aussi être incorporé au composant 2).

Par ailleurs le dispositif 3 comporte des moyens 10 permettant d'assurer la connexion et/ou la déconnexion du composant 2 sur la ligne bifilaire 1a,1b.

Ces moyens sont constitués par deux commutateurs 10 spécifiques qui sont pilotés eux aussi par les moyens de commande 9 et qui s'interposent chacun entre une ligne 1a, 1b du BUS 1 et une branche 5 de raccordement du composant 2.

Les moyens de commande 9 incorporent également des moyens mémoires 13 qui permettent de mémoriser au niveau du dispositif 3 un certain nombre de caractéristiques de la ligne de BUS.

On mémorisera ainsi un algorithme permettant d'assurer la régénération du BUS en fonction des évènements détectés (un tel algorithme sera décrit par la suite).

Les moyens de commande 9 incorporeront également des moyens permettant de détecter une coupure de la ligne BUS 1.

Ces moyens de détection comprendront par exemple un algorithme spécifique (incorporé dans les moyens mémoire 13 de tous les dispositifs 3) et assurant l'émission périodique sur la ligne 1 par chaque dispositif 3 d'un signal de présence. Cet algorithme détectera alors une coupure par l'absence d'au moins un signal devant être émis par un autre des dispositifs 3 présents sur la ligne.

Afin de permettre la conduite de l'algorithme de régénération, les moyens de commande assureront également la mémorisation des présences ou non-présence des autres dispositifs, situés à gauche et à droite, et immédiatement voisins du dispositif 3 considéré.

Conformément à l'invention les commutateurs 10 sont des commutateurs comportant au moins quatre positions différentes : connecté sur la ligne de BUS à gauche, connecté sur la ligne de BUS à droite, connecté sur une ligne de BUS continue, déconnecté d'une ligne de BUS continue.

Les figures 3a et 3b montrent deux modes de réalisation différents pour de tels commutateurs 10.

Chaque commutateur 10 est ainsi constitué par un montage de trois interrupteurs (11a,11b et 11c ou 11α, 11β et 11γ) actionnables individuellement par les moyens de commande 9.

Suivant la figure 3a, le montage est un montage en étoile des trois interrupteurs 11a,11b et 11c.

Suivant la figure 3b, le montage est un montage en triangle des trois interrupteurs 11α, 11β et 11γ.

On voit que ces montages permettent d'obtenir de nombreuses configurations. Chaque interrupteur ayant deux positions possibles il y a en théorie huit possibilités de commande différentes pour chaque commutateur 10, mais certaines possibilités sont équivalentes opérationnellement et il n'y a que cinq configurations de raccordement possibles:
1- composant connecté à gauche → 11a,11b fermés et 11c ouvert (ou 11α fermé et 11β,11γ ouverts).
2- composant connecté à droite → 11a,11c fermés et 11b ouvert (ou 11γ fermé et 11α,11β ouverts).
3- composant connecté à droite et à gauche → 11a,11b et 11c fermés (ou 11β fermé et 11α et/ou 11γ fermés ou encore 11β ouvert et 11α,11γ fermés).
4- composant déconnecté du BUS mais BUS non interrompu → 11b,11c fermés et 11a ouvert (ou 11β fermé et 11α,11γ ouverts).
5- BUS ouvert au niveau d'un composant → toutes les autres configurations que celles décrites précédemment soit : 11b et 11c ouverts quelle que soit la position de 11a; 11a ouvert et 11b ou 11c ouvert (11α,11β,11γ ouverts).

On remarquera que le montage en triangle (figure 3b) offre davantage de combinaisons possibles pour les raccordements selon la configuration numéro 3 ci-dessus (composant connecté à droite et à gauche). Il en résulte une fiabilité supérieure pour ce type de montage.

Bien entendu, les deux commutateurs 10 incorporés dans un dispositif 3 seront commandés d'une façon identique pour que les deux branches 5 du composant 2.i soient effectivement raccordées à droite, ou à gauche, ou déconnectées.

La combinaison au sein d'un même noeud de raccordement 3 de deux résistances de terminaison 4 connectables de façon indépendante et de deux commutateurs 10 couplés offrant cinq positions permet de nombreuses reconfigurations du noeud.

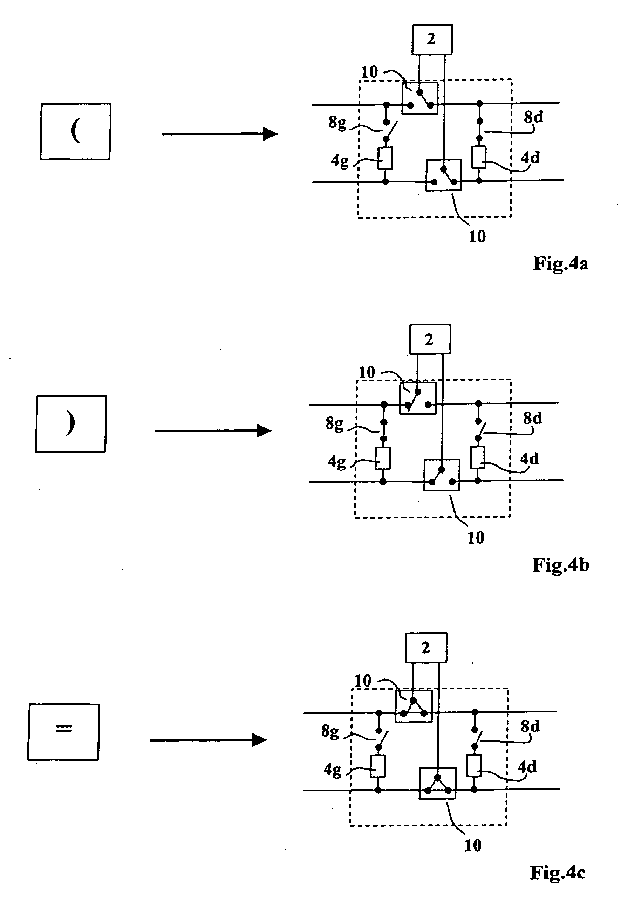

On a représenté sur les figures 4a à 4n les principales configurations utiles parmi les vingt configurations théoriquement possibles. Chaque configuration utile est associée pour la clarté des exposés ultérieurs à un symbole conventionnel.

On notera ainsi "(" la configuration selon la figure 4a et pour laquelle les commutateurs 10 sont raccordés à droite et la résistance de droite 4d est interposée entre les lignes de BUS (interrupteur de droite 8d fermé interrupteur de gauche 8g ouvert). Cette configuration correspond à un noeud 3 constituant une fin de ligne à gauche pour le BUS.

On notera ")" la configuration selon la figure 4b et pour laquelle les commutateurs 10 sont raccordés à gauche et la résistance de gauche 4g est interposée entre les lignes de BUS (interrupteur de droite 8d ouvert interrupteur de gauche 8g fermé). Cette configuration correspond à un noeud 3 constituant une fin de ligne à droite pour le BUS.

On notera "=" la configuration selon la figure 4c et pour laquelle les commutateurs 10 sont raccordés à droite et à gauche (noeud passant) et aucune résistance 4d,4g n'est connectée aux lignes de BUS (interrupteur 8d et 8g ouverts). Cette configuration correspond à un noeud 3 passant disposé sur la ligne de BUS et raccordant un composant 2.

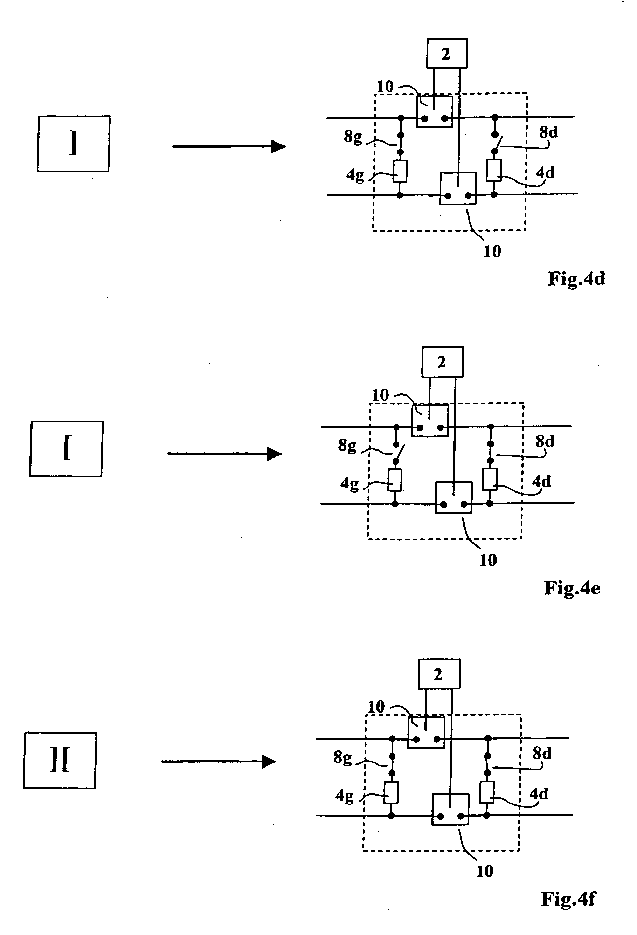

On notera "]" la configuration selon la figure 4d et pour laquelle les commutateurs 10 sont ouverts, la ligne de BUS étant donc interrompue au niveau du noeud 3. La résistance de gauche 4g est interposée entre les lignes de BUS (interrupteur de droite 8d ouvert interrupteur de gauche 8g fermé). Cette configuration est nouvelle par rapport à celles proposées par l'art antérieur. Elle permet de fournir une résistance de terminaison à gauche ce qui permet de fermer une ligne de BUS à gauche au niveau d'un noeud qui ne raccorde pas de composant 2. Il est donc possible de raccorder à gauche de ce noeud 3 un composant standard du commerce 6 c'est à dire dépourvu de moyens de connexion et de résistances de terminaison (voir figure 1). La possibilité est ainsi offerte de définir un noeud 3 sur lequel il n'y a pas de composant 2 raccordé. Il devient aussi possible d'isoler un composant 2 défaillant afin qu'il ne perturbe pas le fonctionnement du BUS.

On notera "[" la configuration selon la figure 4e qui est la position symétrique de celle selon la figure 4d : commutateurs 10 sont ouverts, résistance de droite 4d interposée entre les lignes de BUS (interrupteur de droite 8d fermé interrupteur de gauche 8g ouvert). Cette configuration permet de fournir une résistance de terminaison à droite ce qui permet de fermer une ligne de BUS à droite au niveau d'un noeud qui ne raccorde pas de composant 2 (avec les mêmes avantages que décrit précédemment).

On notera enfin "] [" la configuration selon la figure 4f qui combine les deux configurations précédentes: commutateurs 10 ouverts, résistances de droite 4d et de gauche 4g toutes deux interposées entre les lignes de BUS (interrupteurs de droite 8d et de gauche 8g fermés). Cette configuration permet de fournir une résistance de terminaison à droite et à gauche ce qui permet de fermer une ligne de BUS à droite et à gauche au niveau d'un noeud qui ne raccorde pas de composant 2 (avec les mêmes avantages que décrit précédemment).

Il est enfin possible de combiner les configurations selon les figures 4a et 4b avec celles selon les figures 4d et 4e.

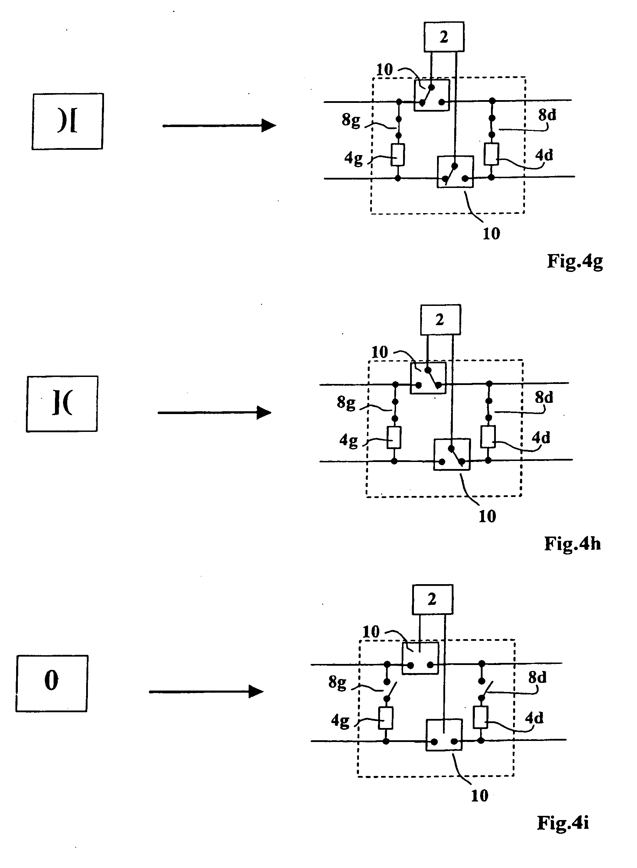

On notera ainsi ") [" la configuration selon la figure 4g dans laquelle les commutateurs 10 sont raccordés à gauche et les deux résistances 4d et 4g sont interposées entre les lignes de BUS (interrupteurs 8d et 8g fermés). Cette configuration correspond à un noeud 3 portant un composant 2 et constituant une fin de ligne à droite pour le BUS tout en constituant aussi une fin de ligne à gauche permettant d'apporter une résistance de terminaison à un composant dépourvu de dispositif de raccordement selon l'invention et situé à droite de ce noeud.

On notera "] (" la configuration selon la figure 4h qui est la symétrique de la précédente, c'est à dire dans laquelle les commutateurs 10 sont raccordés à droite et les deux résistances 4d et 4g sont interposées entre les lignes de BUS (interrupteurs 8d et 8g fermés). Cette configuration correspond à un noeud 3 portant un composant 2 et constituant une fin de ligne à gauche pour le BUS tout en constituant aussi une fin de ligne à droite permettant d'apporter une résistance de terminaison à un composant dépourvu de dispositif de raccordement selon l'invention et situé à gauche de ce noeud.

La figure 4i montre une autre configuration notée "0" et dans laquelle les commutateurs 10 sont ouverts, la ligne de BUS est donc interrompue au niveau du noeud 3. Les deux résistances 4d et 4g sont toutes deux déconnectées (interrupteurs 8d et 8g ouverts). Cette configuration constitue une coupure de ligne BUS sans résistance de terminaison.

Cette configuration est utile quand les lignes de bus ont été endommagées de part et d'autre du composant 2 (ex :court circuit, collage à la masse, à l'alimentation, sur un autre signal ,etc...)

Il est enfin possible de réaliser d'autres configurations de noeuds passants (raccordés à gauche et à droite) mais pour lesquels le composant est déconnecté du BUS.

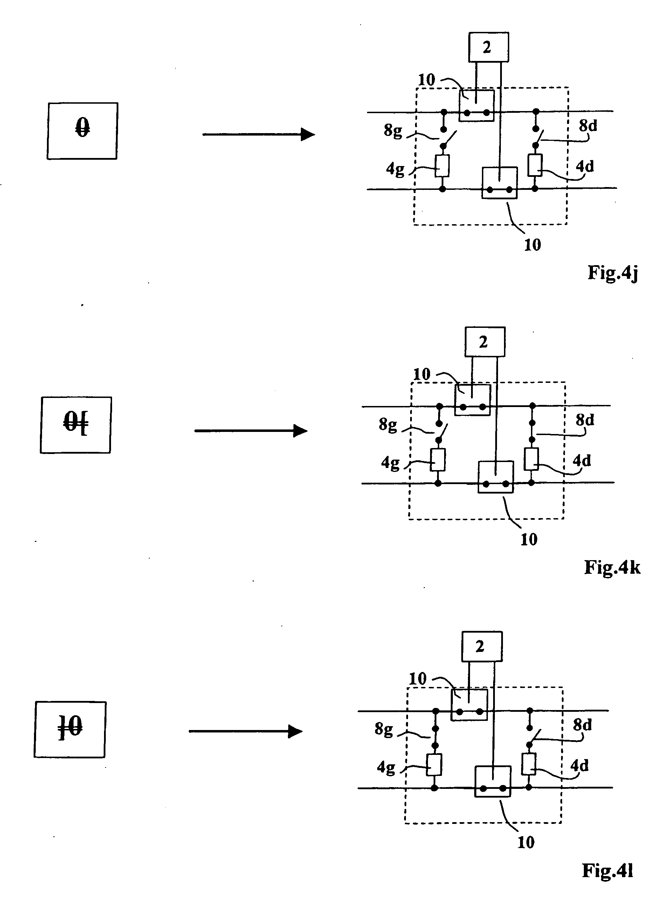

Les figures 4j, 4k et 4l montrent trois autres configurations qui correspondent toutes à un noeud 3 passant c'est à dire n'interrompant pas la ligne de BUS mais un noeud au niveau duquel le composant 2 n'est pas connecté.

On notera " 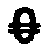 " la configuration selon la figure 4j et dans laquelle aucune résistance 4d ou 4g n'est connectée. Cette configuration est celle adoptée par le noeud 3 quant une défaillance a été détectée au niveau du composant 2 lui-même et que ce dernier a été déconnecté du circuit. Le noeud reste néanmoins passant et le fonctionnement du reste de la ligne de BUS est assuré.

On notera " 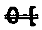 " la configuration selon la figure 4k et dans laquelle le noeud est passant mais une résistance de terminaison 4d est connectée à droite. Cette configuration permet de conserver au noeud son caractère passant tout en fournissant une résistance de terminaison pour un composant standard 6 qui serait disposé à droite du noeud. Il est ainsi possible de terminer une ligne de BUS sur ce composant 6 situé à droite, par exemple en cas de coupure du réseau à droite du composant 6.

On notera enfin " 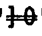 " la configuration selon la figure 4l qui est la symétrique de celle de la figure 4k : noeud 3 passant, résistance de terminaison 4g connectée à gauche.

Il est également possible de donner à un noeud des configurations offrant des résistances de terminaison à gauche ou à droite avec un composant 2 effectivement connecté au niveau du noeud.

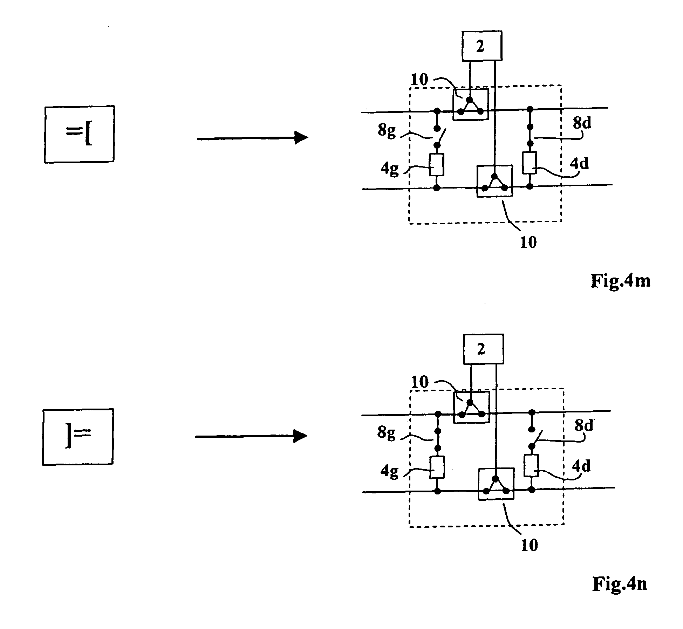

La figure 4m montre la configuration "=[" qui est analogue à " 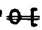 " mais avec le composant 2 connecté (position des commutateurs 10 selon la figure 4c).

La figure 4n montre la configuration "]=" qui est analogue à " 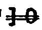 " mais avec le composant 2 connecté (position des commutateurs 10 selon la figure 4c).

Les autres configurations possibles ne présentent pas d'intérêt opérationnel.

Toutes les configurations décrites précédemment, et dans lesquelles le noeud 3 fournit une résistance de terminaison à au moins un composant 6 voisin du noeud 3 considéré, fonctionneront électriquement de façon optimale si la distance entre le noeud 3 et le raccordement du ou des composants 6 est suffisamment faible (de l'ordre de quelques centimètres). Les configurations concernées sont celles dont la notation comporte un "[" ou un "]", c'est à dire celles des figures 4d à 4 h et 4k à 4n.

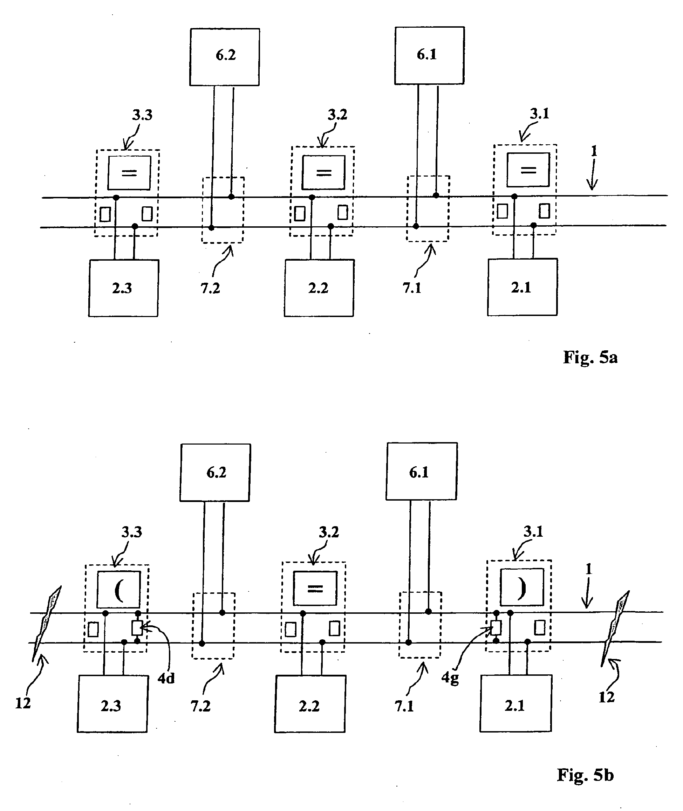

La figure 5a montre un exemple de ligne de BUS portant trois composants 2.1, 2.2 et 2.3 ainsi que leurs dispositifs ou noeuds de raccordement 3.1, 3.2 et 3.3. La ligne se prolonge bien sûr vers d'autres composants non représentés et il y a donc une connexion électrique entre le noeud 3.1 et le noeud 3.3. Tous les noeuds sont représentés dans leur état connecté et passant "=". Deux composants 6.1 et 6.2 sont raccordés par ailleurs au BUS 1 par des connecteurs standard 7.1 et 7.2 qui ne comportent pas le dispositif de raccordement selon l'invention.

Ces connecteurs standard 7 sont intercalés entre deux dispositifs de raccordement 3 selon l'invention.

La figure 5b montre cette même ligne de BUS après apparition de deux coupures 12. Les dispositifs de raccordement se reconfigurent alors pour régénérer le BUS. Le noeud 3.1 passe à la configuration ")" tandis que le noeud 3.3 passe à la configuration "(". Des résistances de terminaison se trouvent donc positionnées : une résistance gauche 4g pour le noeud 3.1 et une résistance droite 4d pour le noeud 3.3. Par ailleurs les commutateurs 10 de chaque noeud se sont orientés vers la partie non coupée du BUS (voir figures 4a et 4b).

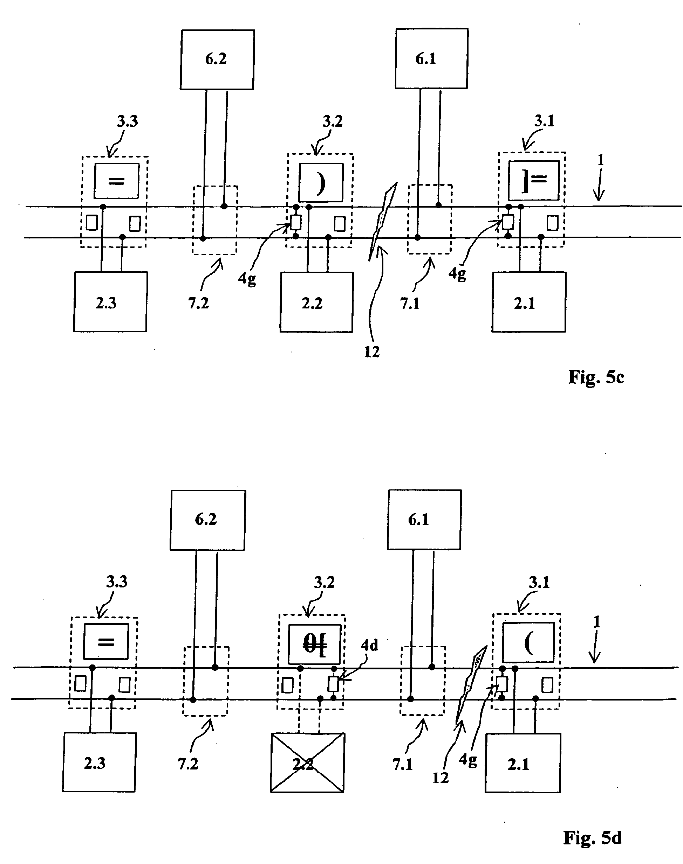

La figure 5c montre ce BUS lorsque la coupure 12 intervient entre le noeud 3.2 et le connecteur standard 7.1.

Le noeud 3.2 se reconfigure alors pour adopter la configuration ")" dans laquelle les commutateurs 10 sont orientés vers la partie gauche du BUS et la résistance 4g se met en place. Par ailleurs le noeud 3.1 adopte la configuration "] =" dans laquelle les commutateurs laissent passer le courant des lignes 1 pour alimenter le composant 6.1 alors qu'une résistance gauche 4g est mise en place pour assurer la terminaison de ligne en l'absence d'une telle résistance pour le connecteur 7.1.

Le fonctionnement de la ligne BUS est assuré sans problème, la distance entre la résistance de terminaison 4g et le connecteur 7.1 devra être de l'ordre de quelques centimètres.

Enfin, la figure 5d montre ce BUS lorsqu'une coupure 12 intervient entre le noeud 3.1 et le connecteur standard 7.1 alors qu'un incident au niveau du composant 2.2 conduit par ailleurs à isoler ce dernier du BUS 1.

Le noeud 3.1 se modifie alors pour adopter la configuration "(" dans laquelle les commutateurs 10 sont orientés vers la partie droite du BUS et la résistance 4d se met en place. Par ailleurs le noeud 3.2 adopte la configuration " 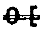 " dans laquelle les commutateurs laissent passer le courant des lignes 1 pour alimenter le composant 6.1 tout en isolant le composant 2.2. Une résistance droite 4d est également mise en place au niveau du noeud 3.2 pour assurer la terminaison de ligne en l'absence d'une telle résistance pour le connecteur 7.1.

On notera que pour permettre les reconfigurations assurant une mise en place de résistance de terminaison pour les composants intercalaires 6, il est nécessaire que chaque dispositif 3.i disposé de part et d'autre d'un tel composant intercalaire reçoive une programmation appropriée lui permettant de connaître cette présence. On prévoira des moyens permettant d'introduire ces informations dans une mémoire ou registre du moyen de commande 9 du dispositif 3.i considéré. Ces moyens peuvent être extrêmement simples car la seule information qu'il suffit de donner à un dispositif 3.i c'est "il y a" ou "il n'y a pas" un composant intercalaire à gauche ou à droite. Il suffira pour introduire cette information de prévoir un interrupteur de présence pour chaque côté (droite ou gauche) du dispositif 3.i.

On voit que le dispositif de connexion selon l'invention permet d'assurer de nombreuses reconfigurations.

Ces reconfigurations sont conduites à l'aide d'un algorithme de régénération qui est incorporé dans les moyens mémoire 13 de chaque dispositif 3. Cet algorithme de régénération du BUS 1 est mis en oeuvre dans tous les dispositifs 3 lors de la détection d'une coupure.

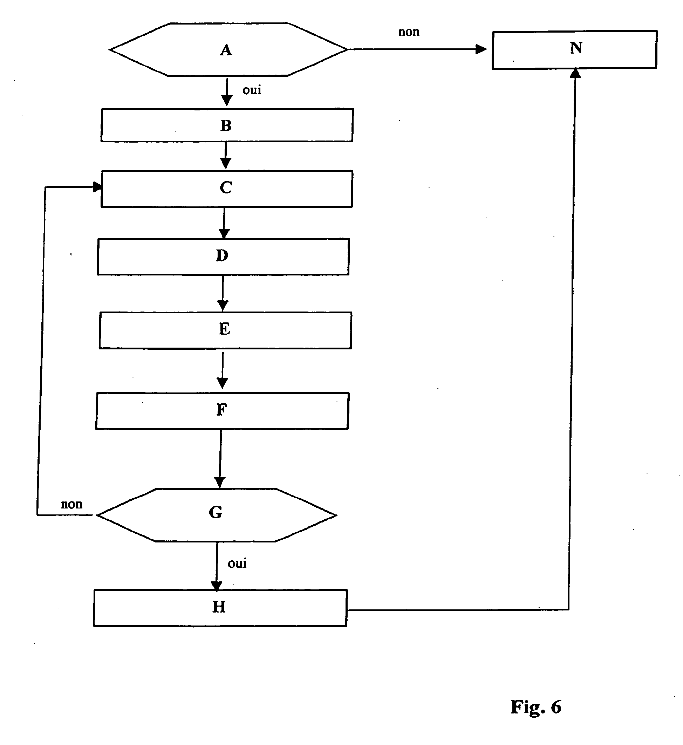

La figure 6 schématise un premier mode de réalisation d'un procédé de régénération pouvant être mis en oeuvre avec la ligne de BUS 1 bifilaire selon l'invention.

L'étape A de ce procédé est un test de détection de la coupure du BUS 1. Comme cela a déjà été expliqué précédemment, lors de son fonctionnement normal chaque dispositif 3 émet sur la ligne 1 (et avec une période donnée) un signal de présence.

Ce signal et un mot binaire formé d'un certain nombre de Bits et qui est spécifique du dispositif considéré.

Lors de l'initialisation de la ligne BUS 1, chaque dispositif 3 mémorise donc les codes des autres dispositifs présents sur la ligne 1. Ainsi lors du fonctionnement normal chaque dispositif reconnaît la présence sur la ligne des signaux de tous les autres dispositifs.

Il est donc capable de détecter à tout moment l'absence d'un ou de plusieurs des signaux des autres dispositifs ce qui signifie qu'il y a une coupure sur la ligne.

L'étape N symbolise le fonctionnement normal de la ligne BUS. Lorsque le test A conduit à la réponse oui, c'est à dire si une coupure est détectée, l'algorithme de régénération se déroule.

Il commence par une étape B qui est une initialisation d'une horloge interne au dispositif 3 puis une remise à zéro de deux mémoires (ou registres) relatifs à la "présence à gauche" et à la "présence à droite" d'un autre dispositif immédiatement voisin du dispositif considéré.

L'étape C est une étape au cours de laquelle on commande le positionnement du dispositif 3 suivant une configuration : connecté à droite "(" ou connecté à gauche ")".

A titre d'exemple, on considèrera ici que l'algorithme décrit commande d'abord la connexion à gauche ")". Le dispositif 3 restera dans cette configuration pendant une durée T_{gi} qui sera choisie de façon aléatoire par l'algorithme (ainsi les dispositifs 3 de la ligne ne seront jamais tous orientés au même moment suivant la même configuration).

Pendant cette durée T_{gi} (étape D) le dispositif émet d'une façon périodique un message de présence à destination des dispositifs voisins à gauche.

Pendant la même durée T_{gi} (même étape D) il reste à l'écoute des signaux émis par les autres dispositifs et il mémorise un message de présence éventuel reçu d'un autre dispositif voisin à sa gauche. La mémoire "présence gauche" passe alors à l'état VRAI.

A l'issue de la durée T_{gi} le dispositif 3 se retourne (étape E) et adopte la configuration symétrique, c'est à dire ici connecté à droite "(".

A l'étape F, le dispositif 3 reste dans cette nouvelle configuration pendant une durée T_{di} qui sera choisie également de façon aléatoire par l'algorithme.

Pendant cette durée T_{di} (étape F), le dispositif émet encore d'une façon périodique un message de présence à destination des dispositifs voisins à droite.

Pendant la même durée T_{di} (même étape F), il reste à l'écoute des signaux émis par les autres dispositifs et il mémorise un message de présence éventuel reçu d'un autre dispositif voisin à sa droite. La mémoire "présence droite" passe alors à l'état VRAI.

La succession d'étapes C, D, E et F se répète pendant un certain temps qui est géré par le test G. L'horloge compare le temps total écoulé T depuis l'étape B avec une valeur maximale préétablie Tmax.

Par ailleurs, l'algorithme vérifie l'état des mémoires "présence gauche" et "présence droite".

Si T > T max ET ("Présence gauche=VRAI" ou "présence droite=VRAI").

Alors le test G conduit à l'étape H qui est celle de la reconfiguration proprement dite du dispositif 3.

Le dispositif considère le contenu de ses mémoires "présence gauche" et "présence droite".

Si "présence gauche = VRAI" ET "présence droite = VRAI", cela signifie qu'un dispositif voisin a été détecté à la gauche et à la droite du dispositif 3 considéré. Ce dernier ne se trouve donc pas en bout de ligne. L'algorithme commande alors une reconfiguration de type "=" (connexion à gauche et à droite sans résistance de terminaison).

Si "présence gauche = VRAI" ET "présence droite = FAUX", cela signifie qu'un dispositif voisin n'a été détecté qu'à la gauche du dispositif considéré. Le dispositif est en bout de ligne à droite. L'algorithme commande alors une reconfiguration de type ")" (connexion à gauche et résistance de terminaison à gauche).

Si inversement "présence gauche = FAUX" ET "présence droite = VRAI", cela signifie qu'un dispositif voisin n'a été détecté qu'à la droite du dispositif considéré. Le dispositif est en bout de ligne à gauche. L'algorithme commande alors une reconfiguration de type "(" (connexion à droite et résistance de terminaison à droite).

Après reconfiguration, le dispositif revient à l'étape N qui est le fonctionnement normal du BUS.

Un des principaux avantages de ce procédé est que les noeuds 3 de la ligne BUS 1 n'ont pas besoin de recevoir une programmation de la topologie initiale du BUS (ordre relatif des noeuds).

Si la ligne BUS comporte des composants intercalaires 6 l'algorithme sera bien entendu modifié pour tenir compte de ces composants.

Le procédé fonctionne dans tous les cas de pannes : coupure d'un ou plusieurs fils entre 2 noeuds, interférences entre signaux, courts-circuits etc ...

Le procédé fonctionne même s'il y a sur la ligne BUS 1 plusieurs pannes simultanées et/ou successives.

Chaque durée aléatoire T_{gi}, T_{di} est choisie inférieure à un majorant Tr qui est de l'ordre de 2 à 4 fois la durée d'émission d'un message "présence". La durée du majorant Tr peut être très faible (car il n'y a au cours d'une étape D ou F que deux noeuds 3 en présence). La régénération peut donc être très rapide. Pratiquement la valeur de Tmax est de l'ordre de quelques dizaines de Tr (soit au total un temps variant selon les types de BUS de quelques micro secondes à un dixième de seconde).

Une fois l'algorithme terminé, chaque noeud établit à nouveau la liste des noeuds qui font partie de son nouveau BUS. Il y a donc une réinitialisation du ou des nouveaux BUS partiels délimités par les coupures.

Chaque dispositif mémorise donc les dispositifs qui émettent leurs signaux de présence. Cette réinitialisation permet à l'algorithme de détection de coupure ou de défauts de fonctionner à nouveau correctement. Si une nouvelle coupure apparaît, le procédé peut donc être appliqué à nouveau pour reconfigurer le ou les BUS.

Optionnellement, le procédé peut être appliqué systématiquement (c'est à dire même s'il n'y a pas eu de nouvelles disparitions de noeud 3) avec une période Ts qui est typiquement comprise entre quelques Tmax et quelques secondes. Cette variante permettrait de prendre en compte l'ajout "à chaud" de nouveaux noeuds sur le BUS.

Ce procédé de régénération peut bien entendu être mis en oeuvre dans une ligne de BUS bifilaire comportant des noeuds 3 selon l'art antérieur (par exemple des noeuds tels que définis par EP-895899). L'essentiel est que les différents noeuds 3 puissent occuper au moins trois positions différentes : passant ("="), fin de ligne à gauche ("(") ou fin de ligne à droite (")"). Il faudra bien entendu par ailleurs que les noeuds 3 comportent des moyens mémoire 13 permettant de recevoir l'algorithme de régénération ainsi que l'algorithme permettant de détecter les coupures.

La figure 7 est un logigramme qui schématise un deuxième mode de réalisation d'un procédé de régénération pouvant être mis en oeuvre avec une ligne de BUS 1 bifilaire selon l'invention.

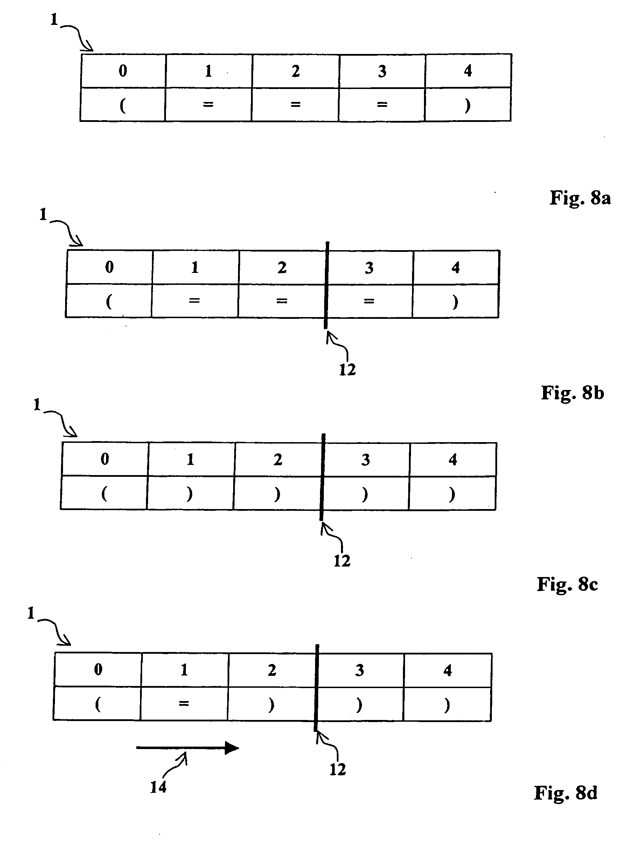

Cet autre mode de réalisation nécessite que chaque noeud 3 du dispositif connaisse sa position par rapport aux noeuds voisins. On affectera donc lors de la mise en place du BUS un numéro d'ordre à chaque noeud, numéro croissant de 0 à N en partant d'un noeud donné. On pourra par exemple (voir la figure 8a) définir un BUS 1 comportant cinq noeuds 3 (ou dispositifs de raccordement) affectés d'un numéro d'ordre de 0 à 4 de la gauche vers la droite. On voit sur la figure 8a, qui met en oeuvre les symboles décrits précédemment, que le BUS comprend trois noeuds passants (les numéros 1, 2 et 3) un noeud d'extrémité gauche "(" (le numéro 0) et un noeud d'extrémité droite ")" (le numéro 4).

Par ailleurs et d'une façon classique (mais non représentée), le noeud N₀ et raccordé à sa gauche au noeud N₄ (BUS annulaire) .

Ces numéros sont mis en mémoire dans chaque noeud lors de l'installation du BUS.

Le procédé selon la figure 7 comporte une étape A identique à celle décrite précédemment qui est un test de détection de la coupure du BUS 1.

L'étape N symbolise là encore le fonctionnement normal de la ligne BUS. Lorsque le test A conduit à la réponse oui, c'est à dire si une coupure est détectée, l'algorithme de régénération se déroule. La figure 8b montre schématiquement une coupure 12 (trait fort) positionnée entre les noeuds numéro 2 et numéro 3.

Pour ce mode de réalisation l'algorithme commence également par une étape B qui est une initialisation d'une horloge interne au dispositif 3 puis une remise à zéro de deux mémoires (ou registres) relatifs à la "présence à gauche" et à la "présence à droite" d'un autre dispositif immédiatement voisin du dispositif considéré.

L'étape I est une étape au cours de laquelle tous les noeuds 3 sauf le noeud numéro 0 (ou N₀) s'orientent au préalable suivant la même direction (ici celle connecté à gauche ")"). Voir aussi la figure 8c.

Le dispositif ayant le numéro d'ordre minimal N₀ s'oriente suivant la direction inverse (ici connecté à droite "("). On pourrait à titre de variante positionner tous les noeuds suivant la même direction puis retourner ensuite le noeud N₀ seul.

Ensuite au cours de l'étape J tous les dispositifs émettent un signal de présence avec une période donnée (qui pourra être très faible, de l'ordre de quelques fois la période minimum réalisable).

Au cours de l'étape K chaque dispositif 3 va mémoriser la présence éventuelle d'un dispositif voisin.

Du fait des orientations des différents dispositifs, c'est le noeud N1 qui va détecter tout d'abord la présence du noeud N0.

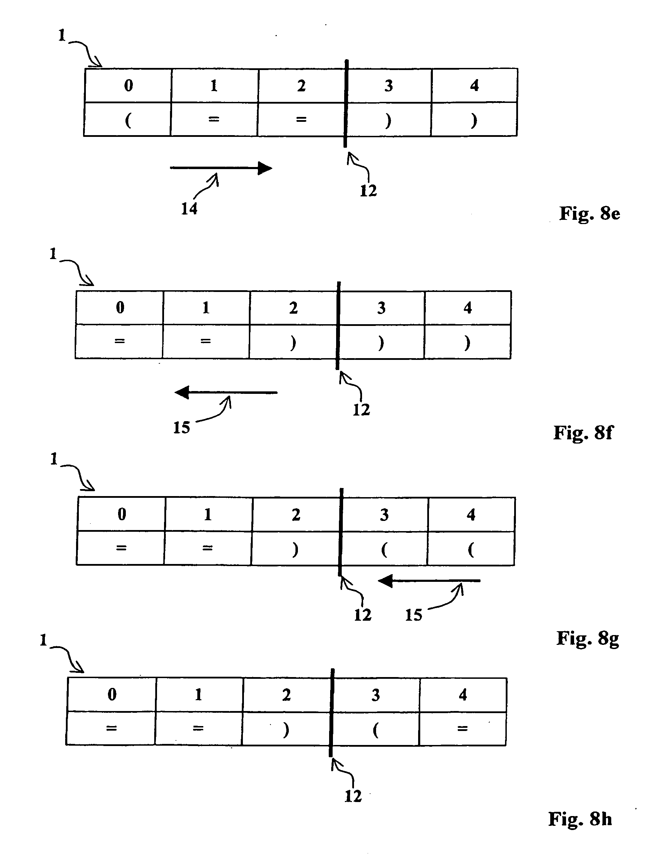

Si un dispositif de rang Nᵢ reçoit un signal de présence d'un dispositif de rang Nᵢ₋₁ on le fera basculer en mode passant. La figure 8d montre ainsi que le noeud N1 est passé en mode passant "=" ce qui lui permet d'émettre vers le noeud N2 qui passe à son tour en mode passant (figure 8e). On voit que la détection des différents noeuds évolue progressivement du noeud N0 vers les noeuds 3 de rang supérieur (flèche 14).

Cette progression est contrôlée par le test L1 qui compare le temps écoulé depuis l'étape B avec une première durée de régénération maximale donnée Tmax1.

A l'issue de cette durée Tmax1, intervient l'étape H1 qui correspond à un premier niveau de reconfiguration.

Au cours de cette étape on considèrera comme connectés tous les dispositifs ayant détecté au moins un dispositif voisin et comme non connectés ceux n'ayant détecté aucun dispositif voisin. Cet état connecté ou non connecté sera mis en mémoire dans chaque noeud. On définira ainsi une "mémoire de connexion" qui sera à l'état VRAI ou FAUX selon que des dispositifs voisins auront ou non été détectés.

Par ailleurs, au cours de l'étape H1, les dispositifs de rang Nᵢ n'ayant pu recevoir de signal d'un dispositif de rang Nᵢ₊₁ se retournent. C'est le cas dans l'exemple des figures 8 pour le noeud numéro 2 qui, du fait de la coupure, ne peut communiquer avec le noeud numéro 3. Le noeud numéro 2 se retourne donc (figure 8f) et devient donc ici connecté à gauche.

Au cours de l'étape H1, les noeuds ayant en mémoire une présence à droite se mettront en mode passant. Ainsi le noeud N0 ayant détecté la présence du noeud N1 se mettra lui aussi en mode passant (voir figure 8f).

Enfin, toujours au cours de l'étape H1, les dispositifs de rang Nᵢ n'ayant pu recevoir de signal ni d'un dispositif de rang Nᵢ₋₁ ni d'un dispositif de rang Nᵢ₊₁ se retournent. Leur "mémoire de connexion" sera alors positionnée à l'état FAUX.

La figure 8g montre ce retournement des noeuds N3 et N4.

La modification de la configuration du noeud N0 permet à la recherche de proximité de progresser suivant la flèche 15.

En effet, le noeud N4 peut alors détecter la présence du noeud N0, ce qu'il ne pouvait pas au cours des étapes précédentes où N0 était connecté à droite "(".

L'algorithme progresse alors par l'étape B1 qui est une remise à zéro des mémoires de présence gauche et droite ainsi que de l'horloge.

Les étapes M et H2 ne concernent par la suite que les dispositifs 3 (ou noeuds) non connectés, c'est à dire ayant une "mémoire de connexion"= FAUX.

Au cours de l'étape M, les dispositifs non connectés vont émettre un signal de présence avec une période donnée et chaque dispositif mémorisera encore la présence éventuelle d'un dispositif voisin.

Si un dispositif de rang Nᵢ reçoit un signal de présence d'un dispositif de rang Nᵢ₊₁ il bascule en mode passant "=". Ainsi, le noeud N4 se repositionne en mode passant (figure 8h).

La reconfiguration progresse suivant la flèche 15.

Cette progression de la détection est contrôlée par le test L2 qui compare le temps écoulé depuis l'étape B1 avec une deuxième durée de régénération maximale donnée Tmax2.

A l'issue de cette durée Tmax2, intervient l'étape H2 qui correspond à un deuxième niveau de reconfiguration.

Au cours de cette étape H2, tous les dispositifs non encore connectés adoptent la configuration qui correspond à leur situation dans le BUS en fonction de la présence ou non de dispositifs voisins détectés au cours des phases d'écoute successives.

Le BUS est alors complètement régénéré (figure 8h) et l'algorithme s'achève sur l'étape N du fonctionnement normal.

Si la ligne BUS comporte des composants intercalaires 6 l'algorithme sera bien entendu modifié pour tenir compte de ces composants.

Comme le procédé précédent, ce procédé de régénération peut lui aussi bien entendu être mis en oeuvre dans une ligne de BUS bifilaire comportant des noeuds 3 selon l'art antérieur (par exemple des noeuds tels que définis par EP895899). L'essentiel est là encore que les différents noeuds 3 puissent occuper au moins trois positions différentes : passant ("="), fin de ligne à gauche ("(") ou fin de ligne à droite (")").

Il faudra bien entendu par ailleurs que les noeuds 3 comportent des moyens mémoire 13 permettant de recevoir l'algorithme de régénération ainsi que l'algorithme permettant de détecter les coupures.

## Revendications

1. Dispositif de raccordement (3) d'un composant (2) sur une ligne (1) de bus bifilaire, dispositif comportant au moins une résistance terminale (4d,4g) et des moyens (10, 8d, 8g) permettant d'assurer la connexion et/ou la déconnexion du composant (2) sur la ligne (1) ainsi que la mise en place de la résistance terminale (4d,4g) entre les deux lignes (1a, 1b) de bus dispositif comprenant également des moyens de commande (9) des différents moyens de connexion, le dispositif comportant deux résistances terminales différentes (4d,4g) disposées de part et d'autre des points de raccordement du composant (2),
chaque résistance terminale pouvant être insérée entre les lignes de bus par un interrupteur spécifique (8d, 8g) faisant partie du dispositif (3) et piloté par les moyens de commande (9),
les moyens (10) permettant d'assurer la connexion et/ou la déconnexion du composant (2) sur la ligne comprenant par ailleurs deux commutateurs (10) faisant eux aussi partie du dispositif (3) et pilotés également par les moyens de commande (9) et interposés chacun entre une ligne (1a, 1b) du bus et une branche (5) de raccordement du composant (2), le dispositif étant **caractérisé en ce que** les commutateurs (10) comportent au moins quatre positions différentes : une position dans laquelle le dispositif est connecté bus sur la ligne de bus à gauche, une position dans laquelle le dispositif est connecté sur la ligne de bus à droite, une position dans laquelle le dispositif est connecté sur une ligne de bus continue, d'une ligne de bus dans laquelle le dispositif est déconnecté d'une ligne de bus continue.

2. Dispositif de raccordement selon la revendication 1, **caractérisé en ce que** chaque commutateur (10) est constitué par un montage en triangle ou en étoile de trois interrupteurs (11a, 11b, 11c, 11α, 11β, 11γ) actionnables individuellement.

3. Dispositif de raccordement selon une des revendications 1 ou 2, **caractérisé en ce que** les moyens de commande (9) sont associés à des moyens mémoires (13) permettant de mémoriser au niveau du dispositif (3) les présences ou non-présence des autres dispositifs de raccordement disposés en amont et en aval du dispositif considéré.

4. Ligne de bus bifilaire, (1a, 1b) permettant de relier différents composants (2) d'un circuit, ligne **caractérisée en ce qu'**elle comporte au moins deux dispositifs de raccordement (3) selon la revendication 3, chaque dispositif de raccordement comportant des moyens permettant de détecter une coupure de la ligne et comportant par ailleurs dans ses moyens mémoires (13) un algorithme de régénération du bus qui est mis en oeuvre lors de la détection d'une coupure.

5. Ligne de bus bifilaire selon la revendication 4, **caractérisée en ce que** les moyens permettant de détecter une coupure de la ligne (1a, 1b) comprennent un algorithme spécifique assurant l'émission périodique sur la ligne par chaque dispositif (3) d'un signal de présence, algorithme détectant une coupure par l'absence d'au moins un signal devant être émis par un autre dispositif.

6. Ligne de bus bifilaire selon une des revendications 4 ou 5, **caractérisée en ce que** chaque dispositif (3) raccordé au bus comporte un numéro d'ordre qui lui est affecté lors de la définition du bus et qui lui permet de repérer sa position par rapport aux dispositifs voisins.

7. Procédé de régénération d'une ligne de bus bifilaire (1a, 1b) selon la revendication 5 et mettant en oeuvre des dispositifs selon la revendication 1, procédé **caractérisé en ce que** :
chaque dispositif de raccordement (3) se connecte vers la gauche ou vers la droite puis émet un signal de présence et reste à l'écoute pendant une durée maximale d'écoute donnée choisie de façon aléatoire et mémorise un message de présence éventuel reçu d'un autre dispositif (3),
chaque dispositif se retourne à l'issue de la durée maximale d'écoute pour se connecter de l'autre côté, émettre un signal de présence, rester à l'écoute pendant une durée maximale d'écoute donnée choisie elle aussi de façon aléatoire et mémoriser un message de présence éventuel reçu d'un autre dispositif (3),
tous les dispositifs adoptent au bout d'une durée de régénération maximale donnée (Tmax) la configuration qui correspond à leur situation dans le bus en fonction de la présence ou non de dispositifs voisins détectés au cours des phases d'écoute successives.

8. Procédé de régénération d'une ligne de bus bifilaire selon la revendication 6 et mettant en oeuvre plusieurs dispositifs selon la revendication 1, procédé **caractérisé en ce que** :
tous les dispositifs (3) s'orientent au préalable suivant la même direction,
le dispositif ayant le numéro d'ordre minimal N₀ se retourne seul,
tous les dispositifs (3) émettent un signal de présence avec une période donnée (T_{gi}) et chaque dispositif mémorise la présence éventuelle d'un dispositif voisin,
si un dispositif de rang Ni reçoit un signal de présence d'un dispositif de rang Nᵢ₋₁ il bascule en mode passant,
si un dispositif de rang Nᵢ ne peut recevoir de signal d'un dispositif de rang Nᵢ₊₁, il se retourne,
on considère comme connectés tous les dispositifs ayant détecté au moins un dispositif (3) voisin et comme non connectés ceux n'ayant détecté aucun dispositif voisin,
tous les dispositifs connectés adoptent au bout d'une première durée de régénération maximale donnée (Tmax1) la configuration qui correspond à leur situation dans le bus (1) en fonction de la présence ou non de dispositifs voisins détectés au cours des phases d'écoute successives.

9. Procédé de régénération d'une ligne de bus bifilaire selon la revendication 8, procédé **caractérisé en ce que** :
on retourne au bout de la première durée de régénération maximale (Tmax1) tous les dispositifs (3) non connectés,
tous les dispositifs non connectés émettent un signal de présence avec une période donnée et chaque dispositif mémorise la présence éventuelle d'un dispositif voisin,
si un dispositif de rang Ni reçoit un signal de présence d'un dispositif de rang Nᵢ₊₁ il bascule en mode passant,
tous les dispositifs non connectés adoptent au bout d'une deuxième durée de régénération maximale donnée (Tmax2) la configuration qui correspond à leur situation dans le bus en fonction de la présence ou non de dispositifs voisins détectés au cours des phases d'écoute successives.

## Claims

1. A connecting device (3) for a component (2) on a two-wire bus line (1), device incorporating at least one terminating resistor (4d, 4g) and means (10, 8d, 8g) enabling the connection and/or disconnection of the component (2) on the line (1) as well as the installation of the terminating resistor (4d, 4g) between the two bus lines (1a, 1b), device also comprising means (9) to control the different connection means, device incorporating two different terminating resistors (4d, 4g) on either side of the connection points (2) of the component,
- each terminating resistor being able to be inserted between the bus lines by a specific switch (8d, 8g) that is part of the device (3) and is piloted by control means (9),
- the means (10) to connect and or disconnect the component (2) on the line additionally comprising two switches (10) that are also part of the device (3) and are also piloted by the control means (9) and are each positioned between a line (1a, 1b) of the bus and a connector (5) of the component (2), device ***wherein*** the switches (10) incorporate at least four different positions: a position in which the device is connected to the bus line to the left, a position in which the device is connected to the bus line to the right, a position in which the device is connected to a continuous bus line, a position in which the device is disconnected from a continuous bus line.

2. A connecting device according to Claim 1, wherein each switch (10) is constituted by a triangle or star assembly of three individually activated switches (11a, 11b, 11c, 11α, 11β, 11γ).

3. A connecting device according to one of Claims 1 or 2, wherein the control means (9) are associated with memory means (13) enabling the presence or non-presence of the other connecting devices arranged upstream or downstream of the device in question to be memorised in the device (3).

4. A two-wire bus line (1a, 1b) enabling different components (2) of a circuit to be linked, wherein it incorporates at least two connecting devices (3) according to Claim 3, each connecting device incorporating means enabling a break in the line to be detected and further incorporating in its memory means (13) a bus regeneration algorithm which is implemented when a break is detected.

5. A two-wire bus line according to Claim 4, wherein the means to detect a break in this line (1a, 1b) comprise a specific algorithm to ensure the periodic transmission on the line of a presence signal by each device (3), the algorithm detecting a break by the absence of at least one signal that should have been transmitted by another device.

6. A two-wire bus line according to one of Claims 4 or 5, wherein each device (3) connected to the bus incorporates a sequence number attributed to it when the bus is being defined and which enables its position to be noted with respect to that of neighbouring devices.

7. A regeneration process of a two-wire bus line (1a, 1b) according to Claim 5 and implementing connecting devices according to Claim 1, process wherein:
- each connecting device (3) is connected to the left or right and then transmits a presence signal and remains in listening mode for a given maximal listening time selected at random and memorises any presence signals received from another device (3),
- after the maximal listening time has elapsed, each device turns to connect the other way, transmits a presence signal, remains in listening mode for a given maximal listening time selected at random and memorises any presence signals received from another device (3),
- after the maximal regeneration time (Tmax) has elapsed, all the devices adopt the configuration corresponding to their location in the bus according to the presence or not of neighbouring devices detected during the successive listening phases.

8. Regeneration process for a two-wire bus line according to Claim 6 and implementing several devices according to Claim 1, process wherein:
- all the devices (3) are oriented beforehand in the same way,
- only the device with the lowest sequence number No turns the other way,
- all the devices (3) transmit a presence signal for a given period (T_{gi}) and each device memorises the presence of any neighbouring devices,
- if a device ranked N₁ receives a presence signal from a device ranked N₁₋₁, it switches to passing mode,
- if a device ranked N₁ does not receive a presence signal from a device ranked N₁₋₁, it turns the other way,
- all those devices (3) having detected at least one neighbouring device are considered to be connected and those not having detected any neighbouring devices are considered to be unconnected,
- after a first given maximal regeneration time (Tmax1) all the connected devices adopt the configuration which corresponds to their location in the bus according to the presence or not of neighbouring devices detected during the successive listening phases.

9. Regeneration process for a two-wire bus line according to Claim 8, process wherein:
- all the unconnected devices (3) are turned the other way after the first maximal regeneration time (Tmax1),
- all the unconnected devices transmit a presence signal for a given period and each device memorises the possible presence of any neighbouring devices,
- if a device ranked N₁ receives a presence signal from a device ranked N₁₊₁, it switches to passing mode,
- after a second given maximal regeneration time (Tmax2) all the unconnected devices adopt the configuration which corresponds to their location in the bus according to the presence or not of neighbouring devices detected during the successive listening phases.

## Patentansprüche

1. Vorrichtung zur Verbindung (3) einer Komponente (2) an eine bifilare Bus-Leitung (1), wobei die Vorrichtung wenigstens einen Endwiderstand (4d, 4g) und Mittel (10, 8d, 8g) umfasst, welche es ermöglichen, die Verbindung und/oder Trennung der Komponente (2) mit/von der Leitung (1) sowie das Einsetzen des Endwiderstands (4d, 4g) zwischen die beiden Bus-Leitungen (1a, 1b) zu gewährleisten, wobei die Vorrichtung auch Mittel (9) zum Steuern verschiedener Verbindungsmittel umfasst, wobei die Vorrichtung zwei verschiedene Endwiderstände enthält (4d, 4g), die beiderseits der Anschlusspunkte der Komponente (2) angeordnet sind,
- wobei jeder Endwiderstand durch einen spezifischen Schalter (8d, 8g), welcher Teil der Vorrichtung (3) ist und von dem Steuermittel (9) gesteuert wird, zwischen die Bus-Leitungen eingefügt werden kann,
- wobei die Mittel (10) es ermöglichen, die Verbindung und/oder Trennung der Komponente (2) mit/von der Leitung zu gewährleisten, welche außerdem zwei Schalter (10) aufweist, die selbst auch Teil der Vorrichtung (3) sind und ebenfalls von den Steuermitteln (9) gesteuert werden und jeweils zwischen einer Bus-Leitung (1a, 1b) und einem Anschlusszweig (5) der Komponente (2) eingefügt sind, wobei die Vorrichtung **dadurch gekennzeichnet ist, dass** die Schalter (10) wenigstens vier verschiedene Positionen umfassen: eine Position, in welcher die Vorrichtung mit der linken Bus-Leitung verbunden ist, eine Position, in welcher die Vorrichtung mit der rechten Bus-Leitung verbunden ist, eine Position, in welcher die Vorrichtung mit einer kontinuierlichen Bus-Leitung verbunden ist, eine Position, in welcher die Vorrichtung von einer kontinuierlichen Bus-Leitung getrennt ist.

2. Verbindungsvorrichtung nach Anspruch 1, **dadurch gekennzeichnet, dass** jeder Schalter (10) von einem dreieckigen oder sternförmigen Aufbau von drei Schaltern (11a, 11b, 11c, 11α, 11β, 11γ) gebildet wird, die individuell betätigbar sind.

3. Verbindungsvorrichtung nach einem der Ansprüche 1 oder 2, **dadurch gekennzeichnet, dass** die Steuermittel (9) mit Speichermitteln (13) verknüpft sind, welche es ermöglichen, das Vorhandensein oder Nichtvorhandensein weiterer Verbindungsvorrichtungen, welche stromaufwärts und stromabwärts der betroffenen Vorrichtung angeordnet sind, seitens der Vorrichtung (3) abzuspeichern.

4. Bifilare Bus-Leitung (1a, 1b), welche es ermöglicht, verschiedene Komponenten (2) eines Schaltkreises zu verbinden, wobei die Leitung **dadurch gekennzeichnet ist, dass** sie wenigstens zwei Verbindungsvorrichtungen (3) nach Anspruch 3 umfasst, wobei jede Verbindungsvorrichtung Mittel umfasst, welche es ermöglichen, eine Unterbrechung der Leitung zu erfassen, und darüber hinaus in den Speichermitteln (13) einen Regenerations-Algorithmus für den Bus umfasst, der bei Erfassung einer Unterbrechung eingesetzt wird.

5. Bifilare Bus-Leitung nach Anspruch 4, **dadurch gekennzeichnet, dass** die Mittel, welche es ermöglichen, eine Unterbrechung der Leitung (1a, 1b) zu erfassen, einen spezifischen Algorithmus umfassen, welcher das periodische Aussenden eines Anwesenheitssignals an die Leitung von jeder Vorrichtung (3) gewährleistet, wobei der Algorithmus eine Trennung durch das Fehlen von wenigstens einem Signal erfasst, bevor es von einer anderen Vorrichtung ausgesendet wird.

6. Bifilare Bus-Leitung nach einem der Ansprüche 4 oder 5, **dadurch gekennzeichnet, dass** jede mit dem Bus verbundene Vorrichtung (3) eine laufende Nummer umfasst, die ihr bei der Definition des Bus zugewiesen wird, und die ihr es ermöglicht, ihre Position in Bezug auf die benachbarten Vorrichtungen ausfindig zu machen.

7. Verfahren zur Regeneration einer bifilaren Bus-Leitung (1a, 1b) nach Anspruch 5 unter Einsatz der Vorrichtungen nach Anspruch 1, wobei das Verfahren **dadurch gekennzeichnet ist, dass**:
jede Verbindungsvorrichtung (3) sich nach links oder nach rechts verbindet, dann ein Anwesenheitssignal aussendet und auf Empfang bleibt während einer gegebenen, maximalen Empfangszeit, die auf zufällige Weise gewählt wird, und eine eventuell von einer anderen Vorrichtung (3) empfangene Anwesenheitsmitteilung abspeichert,
jede Vorrichtung am Ende der maximalen Empfangsdauer zurückspringt, um sich mit der anderen Seite zu verbinden, ein Anwesenheitssignal auszusenden, auf Empfang zu bleiben während einer gegebenen, maximalen Empfangsdauer, die auch auf zufällige Weise gewählt wird, und eine eventuell von einer anderen Vorrichtung (3) empfangene Anwesenheitsmitteilung abzuspeichern,
sämtliche Vorrichtungen am Ende einer gegebenen, maximalen Regenerationsdauer (Tmax) die Konfiguration einnehmen, welche ihrer Situation im Bus in Abhängigkeit des Vorhandenseins oder Nichtvorhandenseins von benachbarten Vorrichtungen entspricht, die im Laufe der aufeinander folgenden Empfangsphasen erfasst wurden.

8. Verfahren zur Regeneration einer bifilaren Bus-Leitung nach Anspruch 6 unter Einsatz mehrerer Vorrichtungen nach Anspruch 1, wobei das Verfahren **dadurch gekennzeichnet ist, dass**:
sich sämtliche Vorrichtungen (3) im Voraus gemäß derselben Richtung orientieren,
die Vorrichtung mit der kleinsten laufenden Nummer N₀ selbst zurückspringt,
sämtliche Vorrichtungen (3) ein Anwesenheitssignal mit einer gegebenen Dauer (T_{gi}) aussenden und jede Vorrichtung die eventuelle Anwesenheit einer benachbarten Vorrichtung abspeichert,
wenn eine Vorrichtung mit Ordnungszahl N₁ ein Anwesenheitssignal einer Vorrichtung mit Ordnungszahl Nᵢ₋₁ empfängt, kippt sie in Durchlauf-Modus,
wenn eine Vorrichtung mit Ordnungszahl N₁ kein Signal einer Vorrichtung mit Ordnungszahl Nᵢ₊₁ empfangen kann, springt sie zurück,
sämtliche Vorrichtungen, die wenigstens eine benachbarte Vorrichtung (3) erfasst haben, als verbunden, und diejenigen, welche keine benachbarte Vorrichtung erfasst haben, als nicht verbunden angesehen werden,
sämtliche verbundene Vorrichtungen am Ende einer ersten, gegebenen, maximalen Regenerationsdauer (Tmax1) die Konfiguration einnehmen, welche ihrer Situation im Bus (1) in Abhängigkeit des Vorhandenseins oder Nichtvorhandenseins von benachbarten Vorrichtungen entspricht, die im Laufe der aufeinander folgenden Empfangsphasen erfasst wurden.

9. Verfahren zur Regeneration einer bifilaren Bus-Linie nach Anspruch 8, wobei das Verfahren **dadurch gekennzeichnet ist, dass**:
sämtliche nicht verbundenen Vorrichtungen (3) am Ende der ersten maximalen Regenerationsdauer (Tmax1) zurückgestellt werden,
sämtliche nicht verbundenen Vorrichtungen ein Anwesenheitssignal mit einer gegebenen Dauer aussenden und jede Vorrichtung die eventuelle Anwesenheit einer benachbarten Vorrichtung abspeichert,
wenn eine Vorrichtung mit Ordnungszahl N₁ ein Anwesenheitssignal einer Vorrichtung mit Ordnungszahl N₁₊₁ empfängt, kippt sie in Durchlauf-Modus,
sämtliche nicht verbundenen Vorrichtungen am Ende einer zweiten, gegebenen, maximalen Regenerationsdauer (Tmax2) die Konfiguration einnehmen, welche ihrer Situation im Bus in Abhängigkeit des Vorhandenseins oder Nichtvorhandenseins von benachbarten Vorrichtungen entspricht, die im Laufe der aufeinander folgenden Empfangsphasen erfasst wurden.
